# EUROPEAN PATENT SPECIFICATION

(11) **EP 3 840 216 B1**
(45) Date of publication and mention of the grant of the patent: **07.10.2026**
(21) Application number: 19306736.0
(22) Date of filing: 20.12.2019
(51) Int. Cl.: H02S 40/42

(54) **HEAT SINK AND ASSOCIATED SOLAR PANEL**
KÜHLKÖRPER UND ZUGEHÖRIGES SOLARPANEEL
DISSIPATEUR DE CHALEUR ET PANNEAU SOLAIRE ASSOCIÉ

(43) Date of publication of application: 23.06.2021
(73) Proprietor: TotalEnergies OneTech, 92400 Courbevoie (FR)
(72) Inventor: HARDER, Nils, 75014 PARIS (FR); BAINIER, Camille, 92330 Sceaux (FR)
(74) Representative: Innovincia

(56) References cited:
- WO-A2-2011/116035
- JP-A- 2016 082 237
- US-A1- 2005 224 212
- US-A1- 2012 211 051
- US-A1- 2014 116 670
- US-B2- 9 842 951
- CHAUHAN ADITYA ET AL: "Futuristic approach for thermal management in solar PV/thermal systems with possible applications", ENERGY CONVERSION AND MANAGEMENT, ELSEVIER SCIENCE PUBLISHERS, OXFORD, GB, vol. 163, 23 March 2018 (2018-03-23), pages 314 - 354, XP085378018, ISSN: 0196-8904, DOI: 10.1016/J.ENCONMAN.2018.02.008

## Description

### Background of the invention

The field of the present invention refers to the photovoltaic energy production and in particular to the heat dissipation of solar panels and more particularly bi-facial solar panels configured for receiving light both on the front face and the back face of the solar panel.

The yield of solar panels depends on their temperature and tends to largely decrease when the temperature of the solar panel exceeds a given temperature threshold.

To overcome this yield reduction, it is well known to use heat dissipation elements to limit the increase of temperature of the solar panel.

Different techniques are known in the state of the art, especially active solutions referring for example to the spraying of a liquid on the solar panel, an air ventilation or a fluid circulation in contact or in proximity with the solar panels. There is also passive solutions such as heat sinks, for example by attaching a metal sheet onto the rear side of the module with fins extending into the ambient air to facilitate the heat transfer from the module into the ambient air. An example of such a heat sink design is shown in US 9 842 951 B2.

However, most of these solutions are difficult or even impossible to adapt on bi-facial solar panels for which light must be able to reach the front and the back sides of the solar panel. Furthermore, some solutions may be difficult or impossible to adapt for solar panels located in areas without energy supply or fluid supply such as solar farms located in desert areas. It is furthermore advantageous to provide a solution that is adaptable to any kind of solar panels without requiring an adaptation of the photovoltaic module on which the solution is positioned. Such adaptability of the solution to standard solar photovoltaic (PV) modules allows to apply the solution to all types of photovoltaic modules. Such adaptability furthermore allows to equip PV modules retrospectively after production of the module, and hence avoiding to dedicate certain PV module production volumes to this solution in advance.

The present invention aims therefore at providing an equipment enabling heat dissipation which can be adapted on most bi-facial solar panels and which can be used in most conditions in order to improve the yield of bi-facial solar panel.

### Summary of the invention

The present invention refers to a heat sink for bi-facial photovoltaic modules configured to be secured to the back side of at least one bi-facial photovoltaic module wherein the heat sink comprises a plurality of rods having a thermal conductivity higher than 10 W.m-1.K-1 and arranged as a mesh configured to be in contact with the back side of the bi-facial photovoltaic module.

According to another aspect of the invention, the rods constitute a three-dimensional pattern.

According to a further aspect of the invention, the rods are metallic rods.

According to an additional aspect of the invention, the rods comprise a reflective surface configured for reflecting solar rays in a specular manner.

According to a further aspect of the invention, the rods are cylindrical.

According to another aspect of the invention, the rods have an elongated cross-section along a direction perpendicular to the back side of the bi-facial photovoltaic module.

According to an additional aspect of the invention, the rods are arranged to form a first grid configured for being in contact with the back side of the bi-facial photovoltaic module, a second grid arranged parallel to the first grid and a plurality of transverse rods arranged between the first and the second grids.

According to a further aspect of the invention, the rods configured to be in contact with the back side of the bi-facial photovoltaic module comprise a flattened portion to improve the contact surface with the back side of the bi-facial photovoltaic module.

The present invention also refers to a solar panel comprising at least one bi-facial photovoltaic module and a heat sink as described previously secured to the back side of the at least one bi-facial photovoltaic module.

According to a further aspect of the invention, the heat sink is glued to the back side of the at least one bi-facial photovoltaic module.

### Brief description of the drawings

[Fig.1] is a diagram of a side view of a solar panel comprising a heat sink according to an embodiment of the present invention;
[Fig.2] is a diagram of a perspective view of the heat sink according to a first embodiment;
[Fig.3] is a diagram of a perspective view of the heat sink according to a second embodiment;
[Fig.4] is a diagram of a perspective view of the heat sink according to a third embodiment;
[Fig.5] is a diagram of a perspective view of the heat sink according to a fourth embodiment;
[Fig.6] is a diagram of a perspective view of the heat sink according to a fifth embodiment.

### Detailed description of the invention

The following achievements are examples. Although, the specification refers to one or several embodiments, it does not imply that each reference refers to the same embodiment or that the features apply only to a single embodiment. Simple features of different embodiments can also be combined to provide other embodiments.

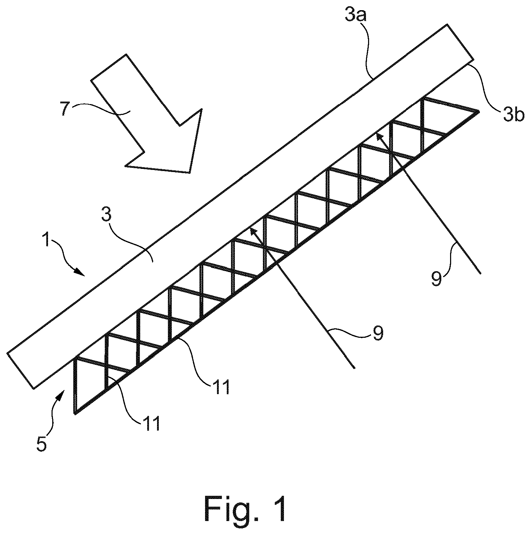

Fig.1 represents a diagram of a solar panel 1 comprising a bi-facial photovoltaic module 3 and a heat sink 5 disposed on the back side 3b of the bi-facial photovoltaic module 3. A bi-facial photovoltaic module 3 refers to a photovoltaic module configured for receiving light from both sides or faces, namely, the front face 3a corresponding to the upper face receiving solar rays directly from the sun as represented by the arrow 7 and the back face 3b corresponding to the lower face receiving reflected solar rays represented by the arrows 9. Reflection of the solar rays may be achieved on the ground or on any other surfaces reflecting a solar ray toward the back side 3b. The bi-facial photovoltaic module 3 is then configured for converting solar rays coming from both sides into electricity.

The heat sink 5 comprises a plurality of rods 11 arranged as a three-dimensional mesh configured to be (partly) in contact with the back side 3b of the bi-facial photovoltaic module 3. A heat sink 5 may be configured to be disposed on a single bi-facial photovoltaic module 3 or on a plurality of adjacent bi-facial photovoltaic modules 3.

The rods 11 refer to elongated elements (having a dimension much longer than the other dimensions). The cross-section of the rods 11 may be circular to produce cylindrical rods but other shape may also be used. In particular, the cross-section may be flattened to reduce the diameter of the rods 11 in a direction perpendicular to the back side 3b of the bi-facial photovoltaic module 3 in order to reduce the number of solar rays 9 reflected by the rods 11 when these rays arrive perpendicular to the back side 3b of the bi-facial photovoltaic module. Furthermore, the rods 11 may be straight (according to their elongated dimension) but other shapes may also be used such as curved or bended rods 11. The rods 11 are made in a material having a thermal conductivity higher than 10 W.m-1.K-1, for example a metal such as aluminum or steel or any other metal. The diameter of the rods 11 is chosen as small as possible to limit the shadow produced by the rods 11. The diameter of the rods 11 and the height of the heat sink 5 may be chosen according to the thermal conductivity of the rods 11. Indeed, a higher conductivity enables the use of rods 11 having a higher length as the heat may be transferred along a longer portion of the rods 11 to be dissipated.

In a preferred embodiment, the rods 11 comprise a reflecting surface configured for reflecting solar rays in a specular manner in order to enable reflection of solar rays 9 impinging the rods 11 with an angle which is not perpendicular to the back side 3b of the bi-facial photovoltaic module to be reflected toward the back side 3b of the bi-facial photovoltaic module 3. The reflection may be obtained by the material of the rods 11 itself or by a dedicated surface treatment or by a dedicated covering of a reflecting layer on the surface of the rods 11.

The density of rods is chosen so that most of the reflected solar rays 9 may reach the back side 3b of the bi-facial photovoltaic module 3. The shadow (or orthogonal projection) produces by the heat sink 5 corresponds for example to less than 50% of the back side of the bi-facial photovoltaic module 3. Furthermore, the rods 11 of the heat sink 5 are distributed over the surface of the back side 3b so that heat from the whole photovoltaic module may be dissipated through the heat sink and so that no local hot points remains. Such distribution corresponds for example to the fact that circular surfaces of the back side 3b that are not in contact with a rod 11 covers at most a limited surface, for example a surface smaller than 5% of the total surface of the back side 3b. The bifacial solar panel 1 may comprise an edge area without any rods 11. This edge area corresponds for example to the area which is located in a range of 5cm from the edge of the back side 3b of the photovoltaic module 3.

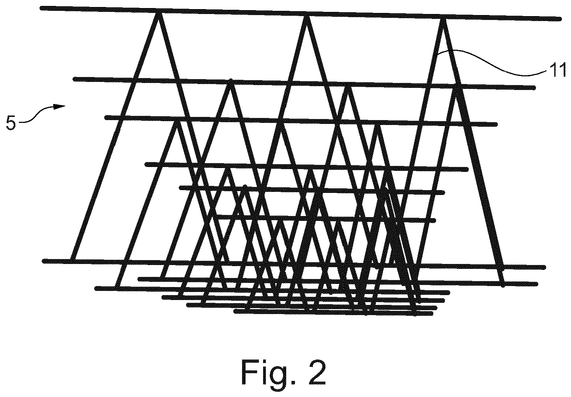

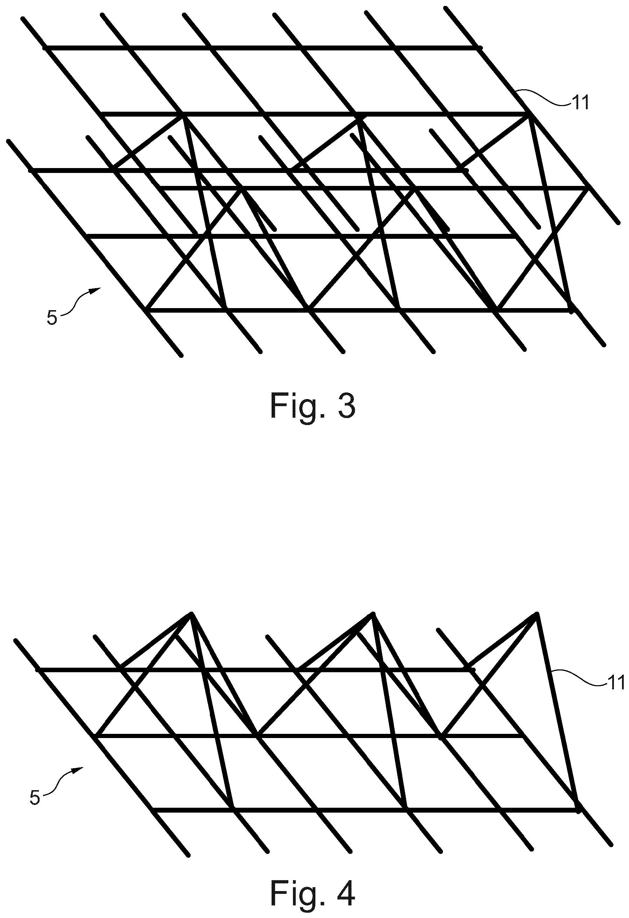

Fig. 2 represents a first embodiment of a heat sink 5 comprising a plurality of straight rods 11. The heat sink 5 comprises a first plurality of rods 11 arranged as a first grid and configured to be in contact with the back side 3b of the photovoltaic module 3, a second plurality of rods 11 arranged as a second grid destined to be disposed parallel to the first grid and a third plurality of rods 11 linking the first and the second grids. The third plurality of rods 11 may be arranged perpendicular to the general direction of the first and second grids but may also be arranged in other directions as represented in fig.2 or both perpendicular to the first and the second grid and in other directions as represented in fig.3. The grids may also be replaced by other two-dimensional mesh patterns, for example crossed rods having angles different than 90°.

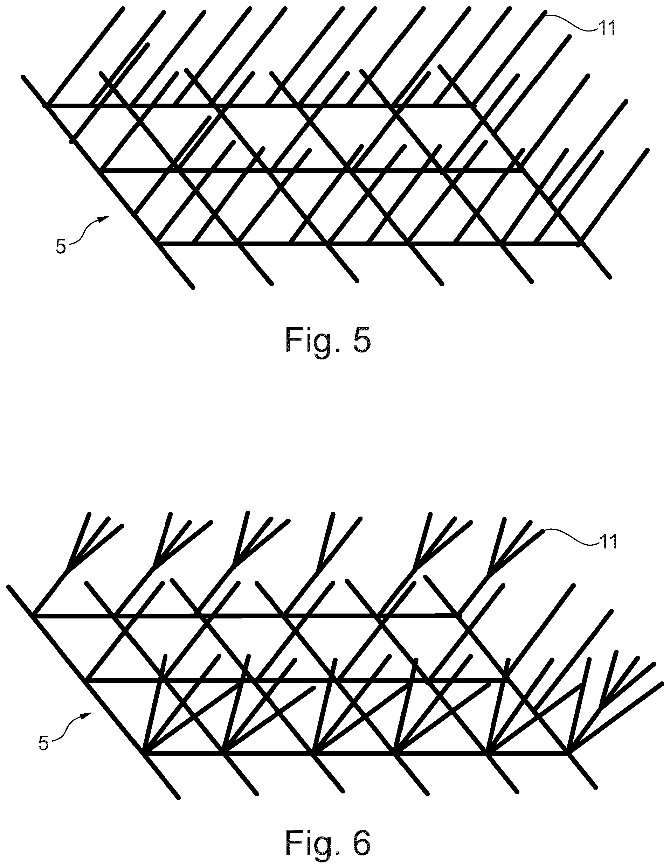

According to another embodiment, the heat sink 5 may comprise a first plurality of rods 11 arranged as a grid configured to be in contact with the back side 3b of the bi-facial photovoltaic module 3 and a second plurality of rods 11 extending outwards from the grid to produce three dimensional patterns such as pyramids as represented in fig.4. Other patterns may also be arranged based on straight bars such as simple rods extending perpendicular from the grid as represented in fig.5 or tree-like pattern as represented in fig.6. Other pattern based on straight or curved rods 11 may also be used to produce a mesh enabling the heat to be transmitted through the different rods 11 and dissipated in the air surrounding the rods 11.

Besides, the portion of the rods 11 configured to be in contact with the back side 3b of the bi-facial photovoltaic module 3 may comprise a flattened part to increase the contact surface between the rods 11 and the back side 3b of the bi-facial photovoltaic module 3 and to provide a pedestal to ease the fastening of the heat sink 5 to the bi-facial photovoltaic module 3. The cross-section of the rods 11 configured to be in contact with the back side 3b of the bi-facial photovoltaic module 3 may therefore be rectangular to increase the contact surface with the said back side 3b.

According to an embodiment of the present invention, the heat sink 5 is glued to the back side 3b of the bi-facial photovoltaic module 3. In order to improve the efficiency of the heat sink 5, the thickness of glue may be limited, for example less than 2 mm and the used glue may have thermal conductivity properties obtained for example by the addition of dedicated particles having a high thermal conductivity such as carbon fiber particles. The gluing of the heat sink 5 enables to adapt the heat sink on any types of bi-facial photovoltaic modules 3.

The use of a heat sink 5 arranged on the back side 3b of a bi-facial photovoltaic module 3 and comprising a mesh of rods 11 presenting large openings enables dissipating efficiently the heat from the bi-facial photovoltaic module 3 while allowing reflected solar rays 9 to reach the back side 3b of the bi-facial photovoltaic module 3 to be converted into electricity. Such heat sink 5 may be adapted to any bi-facial photovoltaic module 3 and does not require any external supply and can therefore be adapted to solar farms located in desert regions.

## Claims

1. Heat sink (5) for bi-facial photovoltaic modules (3) configured to be secured to the back side (3b) of at least one bi-facial photovoltaic module (3), **characterized in that** the heat sink (5) comprises a plurality of rods (11) having a thermal conductivity higher than 10 W.m-1.K-1 and arranged as a mesh configured to be in contact with the back side (3b) of the bi-facial photovoltaic module (3).

2. Heat sink (5) in accordance with claim 1 wherein the rods (11) constitute a three-dimensional pattern.

3. Heat sink (5) in accordance with claim 1 or 2 wherein the rods (11) are metallic rods.

4. Heat sink (5) in accordance with one of the previous claims wherein the rods (11) comprise a reflective surface configured for reflecting solar rays in a specular manner.

5. Heat sink (5) in accordance with one of the previous claims wherein the rods (11) are cylindrical.

6. Heat sink (5) in accordance with one of the previous claims wherein the rods (11) have an elongated cross-section along a direction perpendicular to the back side (3b) of the bi-facial photovoltaic module (3).

7. Heat sink (5) in accordance with one of the previous claims wherein the rods (11) are arranged to form a first grid configured for being in contact with the back side (3b) of the bi-facial photovoltaic module (3), a second grid arranged parallel to the first grid and a plurality of transverse rods (11) arranged between the first and the second grids.

8. Heat sink (5) in accordance with one of the previous claims wherein the rods (11) configured to be in contact with the back side (3b) of the bi-facial photovoltaic module (3) comprise a flattened portion to improve the contact surface with the back side (3b) of the bi-facial photovoltaic module (3).

9. Solar panel (1) comprising at least one bi-facial photovoltaic module (3) and a heat sink (5) according to one of the previous claims secured to the back side (3b) of the at least one bi-facial photovoltaic module (3).

10. Solar panel (1) in accordance with claim 9 wherein the heat sink (5) is glued to the back side (3b) of the at least one bi-facial photovoltaic module (3).

## Patentansprüche

1. Kühlkörper (5) für bifaziale Photovoltaikmodule (3), dazu ausgebildet, an der Rückseite (3b) mindestens eines bifazialen Photovoltaikmoduls (3) befestigt zu sein, **dadurch gekennzeichnet, dass** der Kühlkörper (5) mehrere Stäbe (11) umfasst, die eine Wärmeleitfähigkeit von mehr als 10 W.m-1.K-1 aufweisen und als Netz angeordnet sind, das dazu ausgebildet ist, mit der Rückseite (3b) des bifazialen Photovoltaikmoduls (3) in Kontakt zu sein.

2. Kühlkörper (5) nach Anspruch 1, wobei die Stäbe (11) ein dreidimensionales Muster bilden.

3. Kühlkörper (5) nach Anspruch 1 oder 2, wobei die Stäbe (11) Metallstäbe sind.

4. Kühlkörper (5) nach einem der vorhergehenden Ansprüche, wobei die Stäbe (11) eine reflektierende Fläche umfassen, die zum Reflektieren von Sonnenstrahlen in einer spiegelnden Weise ausgebildet ist.

5. Kühlkörper (5) nach einem der vorhergehenden Ansprüche, wobei die Stäbe (11) zylindrisch sind.

6. Kühlkörper (5) nach einem der vorhergehenden Ansprüche, wobei die Stäbe (11) einen länglichen Querschnitt entlang einer Richtung senkrecht zu der Rückseite (3b) des bifazialen Photovoltaikmoduls (3) aufweisen.

7. Kühlkörper (5) nach einem der vorhergehenden Ansprüche, wobei die Stäbe (11) angeordnet sind, um ein erstes Gitter, das dazu ausgebildet ist, mit der Rückseite (3b) des bifazialen Photovoltaikmoduls (3) in Kontakt zu sein, ein zweites Gitter, das parallel zu dem ersten Gitter angeordnet ist, und mehrere Querstäbe (11), die zwischen dem ersten und dem zweiten Gitter angeordnet sind, zu bilden.

8. Kühlkörper (5) nach einem der vorhergehenden Ansprüche, wobei die Stäbe (11), die dazu ausgebildet sind, mit der Rückseite (3b) des bifazialen Photovoltaikmoduls (3) in Kontakt zu sein, einen abgeflachten Abschnitt umfassen, um die Kontaktfläche mit der Rückseite (3b) des bifazialen Photovoltaikmoduls (3) zu verbessern.

9. Solarpaneel (1), umfassend mindestens ein bifaziales Photovoltaikmodul (3) und einen Kühlkörper (5) nach einem der vorhergehenden Ansprüche, der an der Rückseite (3b) des mindestens einen bifazialen Photovoltaikmoduls (3) befestigt ist.

10. Solarpaneel (1) nach Anspruch 9, wobei der Kühlkörper (5) auf die Rückseite (3b) des mindestens einen bifazialen Photovoltaikmoduls (3) geklebt ist.

## Revendications

1. Dissipateur thermique (5) pour modules photovoltaïques bifaciaux (3) , configuré pour être fixé à la face arrière (3b) d'au moins un module photovoltaïque bifacial (3), **caractérisé en ce que** le dissipateur thermique (5) comprend une pluralité de tiges (11) présentant une conductivité thermique supérieure à 10 W·m⁻¹.K-1 et disposées sous la forme d'un maillage configuré pour être en contact avec la face arrière (3b) du module photovoltaïque bifacial (3).

2. Dissipateur thermique (5) selon la revendication 1, dans lequel les tiges (11) forment un motif tridimensionnel.

3. Dissipateur thermique (5) selon la revendication 1 ou 2, dans lequel les tiges (11) sont des tiges métalliques.

4. Dissipateur thermique (5) selon l'une des revendications précédentes, dans lequel les tiges (11) comportent une surface réfléchissante configurée pour réfléchir les rayons solaires de manière spéculaire.

5. Dissipateur thermique (5) selon l'une des revendications précédentes, dans lequel les tiges (11) sont cylindriques.

6. Dissipateur thermique (5) selon l'une des revendications précédentes, dans lequel les tiges (11) présentent une section transversale allongée selon une direction perpendiculaire à la face arrière (3b) du module photovoltaïque bifacial (3).

7. Dissipateur thermique (5) selon l'une des revendications précédentes, dans lequel les tiges (11) sont agencées de manière à former une première grille configurée pour être en contact avec la face arrière (3b) du module photovoltaïque bifacial (3), une deuxième grille disposée parallèlement à la première grille et une pluralité de tiges transversales (11) disposées entre les première et deuxième grilles.

8. Dissipateur thermique (5) selon l'une des revendications précédentes, dans lequel les tiges (11) configurées pour être en contact avec la face arrière (3b) du module photovoltaïque bifacial (3) comportent une partie aplatie afin d'améliorer la surface de contact avec la face arrière (3b) du module photovoltaïque bifacial (3).

9. Panneau solaire (1) comprenant au moins un module photovoltaïque bifacial (3) et un dissipateur thermique (5) selon l'une des revendications précédentes, fixé à la face arrière (3b) dudit au moins un module photovoltaïque bifacial (3).

10. Panneau solaire (1) selon la revendication 9, dans lequel le dissipateur thermique (5) est collé à la face arrière (3b) dudit au moins un module photovoltaïque bifacial (3).
